# EUROPÄISCHE PATENTSCHRIFT

(11) **EP 2 793 624 B1**
(45) Veröffentlichungstag und Bekanntmachung des Hinweises auf die Patenterteilung: **27.03.2019**
(21) Anmeldenummer: 12822953.1
(22) Anmeldetag: 21.12.2012
(51) Int. Cl.: A24C 5/56

(54) **ALS FOLIE AUSGEBILDETES MUNDSTÜCKBELAGSPAPIER EINER FILTERZIGARETTE**
MOUTHPIECE LINING PAPER, FORMED AS A FILM/FOIL, OF A FILTER CIGARETTE
PAPIER MANCHETTE D'EMBOUT DE CIGARETTE À FILTRE RÉALISÉ COMME UNE FEUILLE

(30) Priorität: 23.12.2011 AT 18862011
(43) Veröffentlichungstag der Anmeldung: 29.10.2014
(73) Patentinhaber: Tannpapier GmbH, 4050 Traun (AT)
(72) Erfinder: GRIESMAYR, Guenther, A-4600 Wels (AT); PUEHRINGER, Barbara, A-4064 Oftering (AT); KNAUSEDER, Bernhard, A-4060 Leonding (AT)
(74) Vertreter: Burgstaller, Peter
(86) Internationale Anmeldenummer: PCT/AT2012/050203
(87) Internationale Veröffentlichungsnummer: WO 2013/090968

(56) Entgegenhaltungen:
- WO-A1-2011/038430
- WO-A1-2011/042353
- WO-A1-2011/060459
- GB-A- 334 271
- GB-A- 2 135 912

## Beschreibung

Die Erfindung betrifft ein als Folie ausgebildetes Mundstückbelagspapier einer Filterzigarette.

Mit "Folie" ist in diesem Dokument ein dünnes Blatt aus einem Kunststoff gemeint, welches in sich nicht wie Papier oder Textilien aus Fasern aufgebaut ist, sondern im Wesentlichen ein Monolith ist. Anstatt "Folie" könnte dafür auch das Wort "Film" gebraucht werden.

Fünf wesentliche Teile einer üblichen Filterzigarette sind der Tabakstrang, das diesen einhüllende Zigarettenpapier, der Filter, das diesen unmittelbar einhüllende Filterhüllpapier und das Mundstückbelagspapier.

Das Mundstückbelagspapier, oft auch als "Tippingpapier" oder kurz "Tipping" bezeichnet, ist jener Teil der Filterzigarette, welcher beim Rauchen der Filterzigarette durch die Lippen der die Zigarette rauchenden Person berührt wird. Es umhüllt den Filterteil und ragt üblicherweise in Längsrichtung der Filterzigarette auch geringfügig in den Längsbereich des Tabakstranges und umhüllt dort das Zigarettenpapier. Es ist mit dem Filterhüllpapier und dem Zigarettenpapier durch eine Klebung verbunden. Durch das Herstellen dieser Klebung werden in der Zigarettenmaschine Filterteil und Tabakstrangteil mechanisch verbunden. Das Mundstückbelagspapier ist zumeist tatsächlich ein Papier, es kann aber auch eine Folie sein. Im Fall der Ausbildung des Mundstückbelagspapieres als Folie kann es beispielsweise aus Cellulosehydrat bestehen. Im vorliegenden Dokument wird die Bezeichnung "Mundstückbelagspapier" verwendet auch wenn dieses nicht durch ein wirkliches Papier sondern durch eine Folie gebildet ist.

In der Zigarettenmaschine wird das Mundstückbelagspapier durch Verkleben mit dem Filterhüllmaterial und dem Zigarettenpapier verbunden. Ebenso werden die einander überlappenden Enden des um die Zigarette gewickelten Filterhüllpapieres durch Verkleben miteinander verbunden. Als Klebstoff wird - in der Regel - ein Leim verwendet, welcher nach dem Auftrag auf den zu verklebenden Körper vor allem durch Wasserabgabe an diesen an Viskosität und Haftfähigkeit zunimmt.

In einer üblichen Zigarettenmaschine wird das Mundstückbelagspapier von einer Bobine (Rolle) abgerollt, in gespanntem Zustand um einen sogenannten Vorbrecher (eine scharfe Kante eines keramischen Körpers) gezogen, an einzelnen Flächenbereichen mit einer Leimschicht versehen, in Einzelstücke geschnitten und mit einem doppelt langem Filterteil und zwei beidseits stirnseitig daran anliegenden Tabakstrangteilen sowie in einem Überlappungsbereich mit sich selbst durch Verkleben verbunden, indem es um diese Teile so weit herumgewickelt wird, dass es sich selbst ein kleines Stück überlappt. Schließlich wird der so gebildete Körper in zwei Zigaretten aufgeteilt, indem er in der Längsmitte des doppelt langen Filterteils durchgeschnitten wird. Die US 4361156 A beschreibt beispielhaft den Verarbeitungsweg des Mundstückbelagspapieres in der Zigarettenmaschine vom Abwickeln von der Bobine über das Vorbrechen zum Leimauftrag bis zum Zusammenführen mit den weiteren Teilen der Zigarette.

Ein wichtiger, limitierender Faktor für die Menge an Zigaretten, welche durch eine Zigarettenmaschine pro Zeiteinheit hergestellt werden können, ist die Zeitdauer, die ab dem Leimauftrag auf das Mundstückbelagspapier vergehen muss, bis die durch den Leim zwischen den einzelnen Schichten hervorgerufene Haftfestigkeit so gut ist, dass diese Schichten nicht mehr von außen mechanisch aneinander gehalten werden müssen und es beim weiteren Manövrieren der Zigaretten nicht zum Ablösen von Schichten kommt.

Wenn die mit Leim zu verklebenden Schichten zu einer raschen Sorption von Wasser an ihre Oberfläche (Adsorption) bzw. in ihr Volumen (Absorption) neigen, wird bei der Verleimung dem aufgetragenen Leim sehr rasch Wasser entzogen und die Verklebung erreicht sehr rasch die erforderliche Haftfestigkeit.

Diese Sorption von Wasser aus dem Leim erfolgt sehr rasch, wenn als Mundstückbelagspapier und als Filterhüllmaterial echte Papiere verwendet werden. Man verwendet für diese Schichten aber auch gerne Folien, beispielsweise aus Cellulosehydrat. Folien haben schon auf Grund ihrer geringen bzw. nicht vorhandenen Porosität im Allgemeinen nicht die Fähigkeit rasch Wasser durch Sorption zu binden. Zudem haben Folien mikroskopisch betrachtet eine wesentlich kleinere Oberfläche als Papiere und überdies ist die Oberfläche von Folien im Gegensatz zu jener von Papier kaum strukturiert. Folien aus Cellulosehydrat nehmen zwar Wasser auf, jedoch nicht all zu rasch. Wenn eine derartige Folie mit viel Wasser in Kontakt kommt, verformt sie sich zudem störend stark.

Daher können Folien unter Anwendung von Leim nicht so rasch verklebt werden wie Papiere. Aus diesem Grund erreicht man bislang bei Verwendung von Folien als Mundstückbelagspapier bei weitem nicht die Produktionsraten von Zigarettenmaschinen, wie bei Verwendung von echtem Papier als Mundstückbelagspapier. Besonders gering ist die erreichbare Produktionsrate, wenn nicht nur das Mundstückbelagspapier eine Folie ist, sondern auch das Filterhüllpapier und/oder das Zigarettenpapier.

In der GB 294492 A wird schon 1929 vorgeschlagen, das Mundstückbelagspapier aus einem Verbund aus zwei miteinander verklebten Schichten, nämlich einer äußeren Folie und einem inneren Papier, auszubilden. Die Folie hat erwünschte haptische und optische Eigenschaften; durch das Papier erreicht man die gewünschte rasche Verklebbarkeit. Nachteilig ist vor allem, dass das Verbundmaterial relativ dickwandig und steif und damit schwierig zu verarbeiten ist. Es ist auch relativ teuer.

In den Schriften GB 334271 A und GB 337501 A wird schon 1930 vorgeschlagen, ein Mundstückbelagspapier aus einer Folie aus zwei miteinander verbundenen Schichten aus Celluloseester oder Celluloseether auszubilden, wobei die äußere Schicht gut wasserdicht ist und optisch relevante Zusätze wie Farbpigmente oder Metallpulver enthält und wobei die innere Schicht Zusätze aufweist, welche die Verklebungseigenschaft durch wässrige Klebstoffe zu einem Papier verbessern, insbesondere indem sie die Wasserdichtheit verschlechtern. Beispielsweise ist dazu der inneren Schicht Lithopone (Weißpigment aus Bariumsulfat) oder Magnesia zugegeben. Letztendlich hat sich dieser Aufbau nicht durchgesetzt, weil entweder die Verklebungseigenschaften für wirklich rasche Produktion in der Zigarettenmaschine nicht ausreichend verbessert wurden, oder weil das Mundstückbelagspapier sehr steif und damit schwer zu verarbeiten wurde. Zu starken Problemen führte manchmal auch, dass sich das derart gebildete Mundstückbelagspapier bei Kontakt der zu verklebenden Seite mit wässrigem Leim zu sehr in unerwünschter Weise verformt, nämlich im Gegensinn zu dem erwünschten Sinn krümmt.

In der GB 1 422 286 wird vorgeschlagen, ein Mundstückbelagspapier aus einer Kunststofffolie und einer darauf aufgebrachten Lackbeschichtung, beispielsweise mit Kork-Optik, zu bilden. Um die Haftung der Lackbeschichtung auf der Folie zu verbessern, wird vorgeschlagen, die zu beschichtende Seite der Folie vor dem Beschichten aufzurauen. Die Probleme in der Zigarettenmaschine bezüglich des Verklebens mit Leim werden durch die Lackbeschichtung im Wesentlichen nicht verändert.

Die GB 2 199 726 A beschreibt ein Mundstückbelagspapier, welches aus Dekorationsgründen nur an jenem Randbereich, der an der fertigen Zigarette tabakstrangseitig um die Zigarette herum verläuft, eine "nicht ebene Randzone" aufweist. Für einzelne Ausführungen wird zusätzlich vorgeschlagen das Mundstückbelagspapier an besagtem Randbereich mit lokalen Prägungen zu versehen. Um Umformung durch einen thermischen Prozess unterstützen zu können wird angeregt, ein Mundstückbelagspapier zu verwenden, welches einen Anteil an thermoplastischem Material aufweist.

Vor allem aus rechtlichen Gründen wird nicht ernsthaft in Erwägung gezogen, für das Verkleben von Mundstückbelagspapieren, die durch eine Folie gebildet sind, andere Klebstoffe als die für das Verkleben von Papier üblichen Leime zu verwenden, welche durch Wasserabgabe erhärten.

Die WO 2011/060459 A1 beschreibt eine Vorrichtung zum Versehen von Mundstückbelagspapier mit einer Prägestruktur. Bei der Prägung bleibt jedoch die Auswirkung auf das Verkleben des Mundstückbelagspapiers unberücksichtigt, bzw. wird keine Optimierung der Prägung in Hinblick auf die Verklebung beschrieben.

Die der vorliegenden Erfindung zu Grunde liegende Aufgabe besteht daher darin, ein aus einer Folie gebildetes Mundstückbelagspapier bereitzustellen, welches flexibler ist als die oben beschriebenen, mehrschichtigen, eine Folienschicht aufweisenden Mundstückbelagspapiere und dabei rascher durch Leim, welcher durch Wasserabgabe seine Viskosität und Haftfestigkeit erhöht, verbindbar ist als bisherige, als einschichtige Folie aufgebaute Mundstückbelagspapiere.

Für das Lösen der Aufgabe wird vorgeschlagen das Mundstückbelagspapier gemäß Anspruch 1 auszuführen, also zumindest an den zu verklebenden Flächenbereichen mit einer dreidimensionalen Oberflächenstruktur, also mit einer Oberfläche zu versehen, welche Erhebungen aufweist, wobei diese Erhebungen nur lokal (und nicht als durchgehende Beschichtung oder großflächiger Abtrag) aus der Oberfläche emporragen bzw. von dieser zurückspringen, wobei die Erfindung zur Lösung der Aufgabe zwei erfindungsgemäße Alternativen beinhaltet, welche bestehen in:
- Bildung der Erhebungen aus Strukturlack, oder
- Bildung der Erhebungen durch Strukturpigmente, welche Körner sind, die auf Grund ihrer Größe zumindest 0,5 µm aus einer auf der Oberfläche der Folie aufgetragenen Lackschicht oder Strukturlackschicht emporragen.
Ein positiver Effekt auf die Verklebung wird bemerkbar, wenn das Hervorragen gegenüber der ursprünglichen Folienoberfläche mindestens 0,5 µm beträgt und wenn in irgendeiner zur Oberfläche parallelen Richtung je Zentimeter mindestens 2 Höhensprünge vorkommen.
Deutlich bessere Ergebnisse werden erzielt, wenn das Hervorragen gegenüber der ursprünglichen Folienoberfläche mindestens 1,5 µm beträgt und wenn in irgendeiner zur Oberfläche parallelen Richtung je Zentimeter mindestens 10 Höhensprünge vorkommen.
Idealerweise weist die Folienoberfläche in irgendeiner zur Oberfläche parallelen Richtung mindestens 5 Höhensprünge je Millimeter auf. (Das ist gleichbedeutend damit, dass die Höhensprünge maximal 200 Mikrometer voneinander beabstandet sind.)
Durch die Gestaltung der Oberfläche aus Erhebungen und dazwischenliegenden Höhensprüngen wird die Oberfläche vergrößert und auch die mechanische Verankerung der zu verbindenden Komponenten aneinander beim Verkleben verbessert. Indem die Erhebungen nur lokal ausgebildet sind, bleibt die Biegsamkeit und damit Verarbeitbarkeit des Mundstückbelagspapieres in der Zigarettenmaschine davon relativ ungestört. Indem beim Aneinanderpressen der zu verbindenden Schichten zwischen den Erhebungen Hohlräume verbleiben, in welche überflüssiger Leim fließen kann und an welchen keine Druckkraft wirkt, wird an den tatsächlichen Berührungsstellen der Druck (also die Kraft pro Fläche) erhöht, womit die verbleibende Leimschicht dünner wird und damit schneller ausreichend Wasser abgeben kann, um ausreichend hohe Haftfestigkeit zu erreichen.

Die Wirkung wird im Allgemeinen verbessert, je größer die Höhensprünge sind und je mehr Höhensprünge pro Fläche oder Länge Folie untergebracht sind. Sehr gute Wirksamkeit wird bei Höhensprüngen ab etwa 5 µm erreicht.
Besonders wertvoll ist es, eine Reihe von erfindungsgemäßen Erhebungen und dazwischenliegenden Höhensprüngen entlang zumindest eines jener beiden Ränder des Mundstückbelagspapiers vorzusehen, welche an der fertigen Zigarette parallel zur Längsrichtung der Zigarette verlaufen und jene Flächen begrenzen, an denen sich das Mundstückbelagspapier an der fertigen Zigarette selbst überlappt, sodass dort Mundstückbelagspapier auf Mundstückbelagspapier geklebt ist. Indem entlang zumindest eines dieser beiden Ränder lokale Erhebungen vorhanden sind, wird das bei der Zigarettenproduktion mit Folien-Mundstückbelagspapier häufig auftretende, als "open seam" bezeichnete Problem, dass sich im Überlappungsbereich die Verklebung des Mundstückbelagspapiers mit sich selbst löst, wirksam entschärft.
Es ist nicht zwangsweise erforderlich, dass sich besagte Reihe von besagten Erhebungen und dazwischenliegenden Höhensprüngen über die gesamte Länge des Überlappungsbereichs (= die Abmessung des Mundstückbelagspapiers in Zigarettenlängsrichtung) erstreckt. Zumindest von den beiden Längsenden des Überlappungsbereichs her sollte sich eine derartige Reihe aber schon um jeweils ein Viertel der Gesamtlänge des Überlappungsbereichs erstrecken. Die verschiedenen Möglichkeiten, um die erfindungsgemäßen Erhebungen herzustellen, werden weiter unten besprochen.
Die Erfindung wird an Hand von Zeichnungen näher erklärt:
- Fig. 1:: zeigt in stilisierter perspektivischer Darstellung einen Abschnitt eines ersten erfindungsgemäßen Mundstückbelagspapieres.
- Fig. 2:: zeigt ein größeres Stück des Mundstückbelagspapieres von Fig. 1 in gegenüber Fig. 1 verkleinertem Maßstab.
- Fig. 3:: zeigt in stilisierter seitlicher Schnittansicht ein zweites erfindungsgemäßes Mundstückbelagspapier.
- Fig. 4:: zeigt in Darstellung wie in Fig. 1 einen Abschnitt eines dritten Mundstückbelagspapieres. Durch die punktiert eingezeichnete Linie 3 ist jene Schnittfläche an welcher ein einzelnes Mundstückbelagspapier von einer durchgehenden Rolle vieler Mundstückbelagspapiere abgetrennt wird.

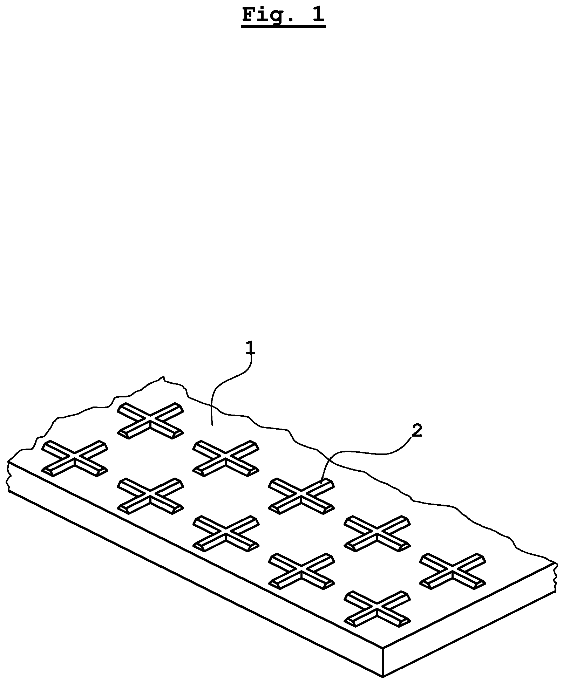

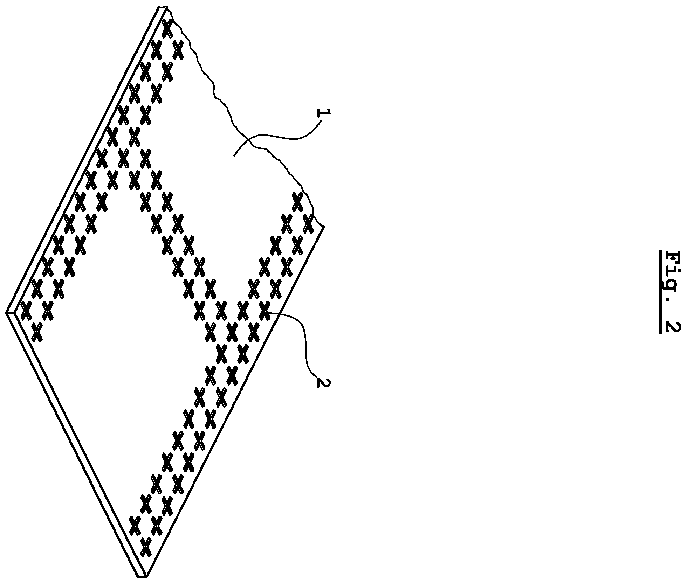

Das Mundstückbelagspapier gemäß Fig. 1 und Fig. 2 besteht aus einer Folie 1 und einem Muster von lokalen Erhebungen 2, welche durch Strukturlack gebildet sein können. Die Seite, der Folie 1 an welcher sich die Erhebungen 2 befinden, ist jene, welche an der fertigen Zigarette die Innenseite des Mundstückbelagspapieres darstellt.

Ein Strukturlack im Sinne dieser Beschreibung ist ein an sich bekannter Lack, mit welchem sich auf einer Oberfläche ein feiner Raster einer fühlbar erhabenen Struktur drucken lässt, beispielsweise können dafür 5 bis 30 nebeneinander liegende Linien pro cm gedruckt werden, welche von nicht bedruckten Oberflächenbereichen um 5 µm bis 30 µm emporragen. Es sind damit aber auch feinere Strukturen, beispielsweise mit 100 nebeneinanderliegenden Linien pro cm, druckbar.

Indem die Erhebungen 2 des Mundstückbelagspapieres gemäß Fig. 1 und Fig. 2 keine durchgehenden "Bergkämme" aufweisen, sondern die einzelnen Erhebungen inselartig voneinander beabstandet sind, ist das Mundstückbelagspapier gegenüber Biegeverformung um einige Achsen kaum gegenüber Mundstückbelagspapier verändert, welches keine Erhebungen 2 aufweist. Wie vor allem in Fig. 2 demonstriert, ist es nicht erforderlich die gesamte Fläche der Folie mit einem Muster von Erhebungen 2 zu versehen. Es reicht aus die Erhebungen 2 entlang jener Linien vorzusehen, an denen es für die Verklebung des Mundstückbelagspapieres von besonderer Bedeutung ist. Insbesondere ist dies an jenem Flächenbereich des Mundstückbelagspapieres wichtig, welcher um den Berührungsbereich zwischen Filterteil und Tabakstrangteil angeordnet wird und an jenem Flächenbereich, an welchem sich das Mundstückbelagspapier nach dem Wickeln um eine Doppelzigarette selbst überlappt. An anderen Flächenbereichen brauchen keine Erhebungen 2 vorgesehen zu werden und es braucht dort auch nicht oder nicht überall geklebt zu werden. Das kann optische und haptische Vorteile bringen.

In einer besonders bevorzugten Ausführungsform wird als Strukturlack ein sogenannter Soft-Touch-Lack eingesetzt. Das ist ein an sich bekannter Lack, welcher in ausgehärtetem Zustand eine gummiartige Konsistenz, also für Lacke ungewöhnlich niedrigen Elastizitätsmodul, ungewöhnlich hohen Elastizitätsbereich und eher ungewöhnlich hohe Reibung aufweist, sodass sich die damit versehenen Oberflächen gummiartig oder samtig anfühlen. An den Kuppen der durch diesen Lack gebildeten Erhebungen wird Leim besonders gut weggequetscht, sodass dort die Leimschicht sehr dünn wird, womit die lokale Austrocknung besonders rasch erfolgt und damit auch das Anwachsen der Haftfestigkeit. Ein weiterer Vorteil besteht darin, dass man mit kleineren Klebeflächen das Auslangen findet, da durch den hohen Reibbeiwert des Soft-Touch-Lackes Mundstückbelagspapier und Filterhüllpapier auch an nicht verklebten Flächenbereichen nahezu aneinander haften, jedenfalls nicht aneinander abgleiten.

Das Ausbilden von Erhebungen aus Strukturlack wirkt sich auch dann vorteilhaft auf die Verklebung des Mundstückbelagspapieres mit dem Filterhüllpapier oder dem Zigarettenpapier aus, wenn die Erhebungen 2 nur an der Außenseite des Mundstückbelagspapieres, also an der vom Filterhüllpapier bzw. dem Zigarettenpapier abgewandten Seite liegen. Auf Grund der lokalen Erhebungen kommt es nämlich beim Fügen des Mundstückbelagspapieres auf die anderen Schichten dazu, dass der Anpressdruck zwischen Mundstückbelagspapier und den weiteren Schichten über die Berührungsfläche stark ungleichmäßig ist. Das führt dazu, dass an den Orten größeren Drucks Leim weggequetscht wird, womit die dort verbleibende Leimschicht recht dünn wird und damit schneller austrocknet und somit die Haftung erhöht. In einer bezüglich Verklebung besonders vorteilhaften Ausführungsform sind lokale Erhebungen 2 an beiden Seiten der Folie 1 angebracht, allerdings in der Ebene der Folie zueinander so sehr versetzt, dass ihre auf der Folie befindlichen Grundflächen einander nicht überlappen, sondern geringfügig beabstandet sind. Beim Fügen des Mundstückbelagspapieres auf die darunter liegenden Schichten wird das Mundstückbelagspapier zu einer Art Wellenlandschaft verformt, womit die Klebefläche erhöht wird und ein Netz von Räumen bereitgestellt wird, in welche der überflüssige Leim hineingequetscht werden kann.

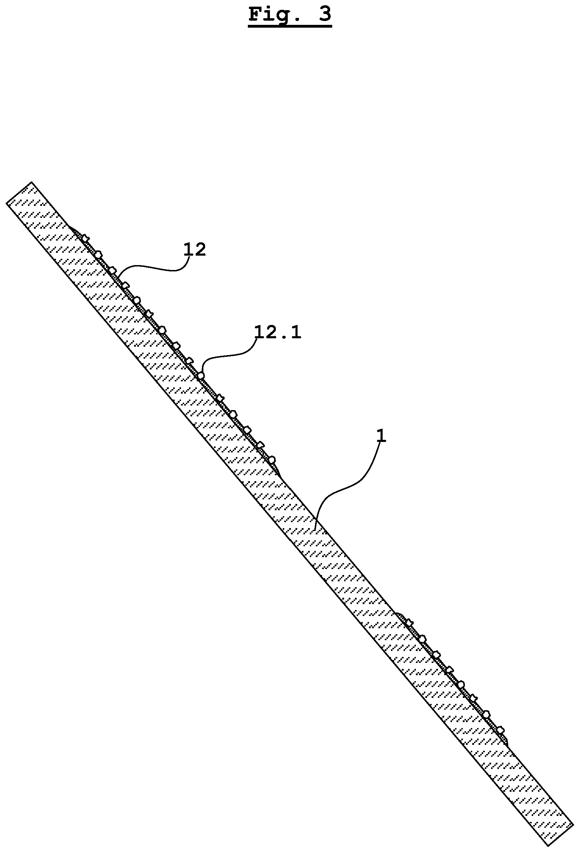

In Fig. 3 ist ein erfindungsgemäßes Mundstückbelagspapier gezeigt, welches aus einer Folie 1 und einer Bedruckung besteht, welche durch eine Lackschicht 12 und an dieser haftenden, sogenannten Strukturpigmenten gebildet ist. Die Strukturpigmente sind Körner, welche auf Grund ihrer Größe deutlich aus der Lackschicht 12 hervorragen und somit die erfindungsgemäßen lokalen Erhebungen 12.1 bilden. Typischerweise können die Strukturpigmente einen Durchmesser von etwa 5 bis etwa 25 µm aufweisen, während die Lackschicht nur 1 µm Dicke aufweist.

Die Strukturpigmente können schon im Lack enthalten sein, oder sie können in einem separaten Arbeitsgang auf die erforderlichenfalls noch feuchte Lackschicht aufgebracht werden. Beispielsweise können sie als trockenes Pulver von Feststoffpartikeln aufgestreut werden oder als Dispersionen von Feststoffpartikeln in einer flüssigen Matrix aufgebracht werden, wobei die flüssige Matrix nach dem Auftragen aushärten oder sich verflüchtigen kann.
Es ist besonders vorteilhaft, als Material für die Strukturpigmente ein solches zu verwenden, welches eine hohe innere Oberfläche hat und gut Wasser aufnehmen kann, also auch gut durch Wasser benetzbar ist. Gut dafür geeignete Materialien sind gefällte Kieselsäuren (Kieselgel), Zeolithe (Alumosilikate), Bentonite (Natürliche Tonminerale mit hoher innerer Oberfläche), Magnesiumoxid (Magnesia, Bittererde), Lithopone (Weißpigment aus Bariumsulfat). In einer besonders vorteilhaften Ausführung können zusätzlich auch in der Lackschicht 12 bzw. in dem Strukturlack aus dem die Erhebungen 2 gemäß Fig. 1 gebildet sind, die genannten Materialien mit hoher innerer Oberfläche als Pigmente enthalten sein, welche nicht zwangsweise überstehen müssen.
Man kann natürlich auch die Lackschicht 12 gemäß Fig. 3 aus Strukturlack bilden.

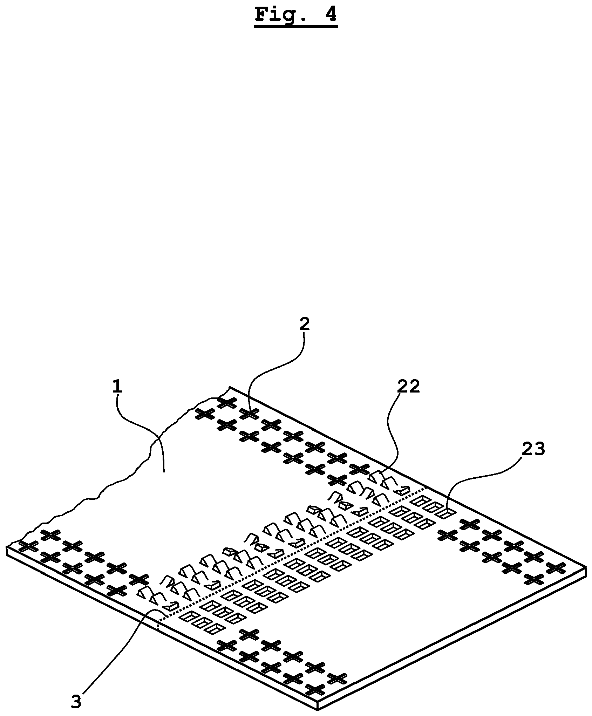

In Fig. 4 ist, nicht erfindungsgemäss, ein beispielhaftes Mundstückbelagspapier skizziert, bei welchem Erhebungen 22 durch eine Kombination aus Ausstanzen und Prägen gebildet sind, sodass aus der Ebene des Mundstückbelagspapieres kurze, etwa rechteckige Materialzungen emporstehen, welche nur mit einer ihrer vier Randlinien noch in direkter Materialverbindung mit dem restlichen Mundstückbelagspapier stehen. Die Vertiefungen 23 gemäß Fig. 4 sind durch Ausstanzen von Material gebildet. Im Beispiel gemäß Fig. 4 sind jene Flächenbereiche eines Mundstückbelagspapieres mit als Ausstanzungen ausgebildeten Vertiefungen 23 bzw. mit durch teilweises Ausstanzen und Prägen geformten Erhebungen 22 versehen, welche in der Zigarettenmaschine übereinander gefaltet und miteinander verklebt werden. Indem die Erhebungen auf die Innenseite des Mundstückbelagspapier emporragen und indem die Vertiefungen 23 im gleichen Rastermaß angeordnet sind wie die Erhebungen 22 und indem die Abmessungen der Grundfläche der Erhebungen 22 etwas kleiner sind als die Abmessungen der Grundfläche der Vertiefungen 23, können beim Wickeln des Mundstückbelagspapieres in der Zigarettenmaschine die Erhebungen 22 in die Vertiefungen 23 eingreifen. Damit wird ein gutes mechanisches Verankern der beiden überlappenden Randbereiche des Mundstückbelagspapieres gegen Verrutschen aneinander erreicht. Es ist vorteilhaft, nicht bei allen Materialzungen, welche die Erhebungen 22 bilden, jene Randseiten, an der die Materialzunge mit der restlichen Folie 1 verbunden sind an der gleichen Seite anzuordnen, sondern einzelne Materialzungen relativ zu anderen Materialzungen um zur Ebene der Folie 1 normale Achsen verdreht anzuordnen. Damit wird das Sichern gegen Verrutschen der beiden überlappenden Bereiche in alle Richtungen in der Verbindungsebene verbessert. Indem auch die zur Ebene der Folie 1 geneigt liegenden Begrenzungsflächen der Erhebungen 22 und Vertiefungen 23 Klebeflächen sind, wird natürlich auch die Verklebung an sich verbessert.

Durch die genannten Maßnahmen werden Mundstückbelagspapiere, welche aus Folie gebildet sind, wesentlich rascher mit den gleichen Leimen verklebbar, welche für übliche, aus Papier bestehende Mundstückbelagspapiere anwendbar sind.

## Patentansprüche

1. Mundstückbelagspapier einer Filterzigarette wobei das Mundstückbelagspapier eine Folie (1) ist und an zu verklebenden Flächenbereichen an der mit Klebstoff in Kontakt kommenden Seite mit einer dreidimensionalen Oberflächenstruktur, also mit einer Oberfläche versehen ist, welche Erhebungen (2, 12.1, 22) aufweist, wobei diese Erhebungen (2, 12.1, 22) nur lokal aus der Folienoberfläche emporragen,
**dadurch gekennzeichnet,**
**dass** die Erhebungen (2) aus Strukturlack gebildet sind, oder dass die Erhebungen (12.1) durch Strukturpigmente gebildet sind, welche Körner sind, die auf Grund ihrer Größe mindestens 0,5 µm aus einer auf der Oberfläche der Folie (1) aufgetragenen Lackschicht (12) oder Strukturlackschicht emporragen.

2. Mundstückbelagspapier nach Anspruch 1, **dadurch gekennzeichnet, dass** eine Reihe von Erhebungen (2, 12.1, 22) entlang eines solchen Randes des Mundstückbelagspapiers verläuft, welcher an der fertigen Zigarette längs des Überlappungsbereichs des Mundstückbelagspapiers mit sich selbst verläuft.

3. Mundstückbelagspapier nach Anspruch 1 oder 2, **dadurch gekennzeichnet, dass** das Hervorragen gegenüber der ursprünglichen Folienoberfläche mindestens 0,5 µm, bevorzugt mindestens 1,5 µm, besonders bevorzugt mindestens 5µm beträgt und dass auf der Folienoberfläche entlang einer geraden Strecke pro 1 cm Länge mindestens 2, bevorzugt mindestens 10 Höhensprünge vorkommen.

4. Mundstückbelagspapier nach einem der Ansprüche 1 bis 3, **dadurch gekennzeichnet, dass** einzelne Erhebungen (2, 12.1, 22) inselartig von anderen Erhebungen (2, 12.1, 22) beabstandet sind.

5. Mundstückbelagspapier nach einem der Ansprüche 1 bis 4, **dadurch gekennzeichnet, dass** Erhebungen (2, 12.1, 22) ausschließlich am Rand des Mundstückbelagspapier angeordnet sind.

6. Mundstückbelagspapier nach Anspruch 1 bis 5, **dadurch gekennzeichnet, dass** der Lack oder Strukturlack ein Soft-Touch-Lack ist.

7. Mundstückbelagspapier nach einem der Ansprüche 1 bis 6, **dadurch gekennzeichnet, dass** lokale Erhebungen (2) aus Strukturlack an beiden Seiten der Folie (1) angebracht sind, wobei an unterschiedlichen Seiten der Folie (1) befindliche Erhebungen (2) in der Ebene der Folie (1) zueinander so sehr versetzt sind, dass ihre auf der Folie (1) befindlichen Grundflächen einander nicht überlappen, sondern voneinander beabstandet sind.

8. Mundstückbelagspapier nach einem der Ansprüche 1 bis 7, **dadurch gekennzeichnet, dass** die Strukturpigmente aus einem Material mit hoher innerer Oberfläche und gute Wasseraufnahmefähigkeit gebildet sind vorzugsweise gefällte Kieselsäuren, Zeolithe, Bentonite, Magnesiumoxid oder Lithopone.

9. Mundstückbelagspapier nach einem der Ansprüche 1 bis 7, **dadurch gekennzeichnet, dass** die Lackschicht (12) oder Strukturlackschicht der Erhebungen (2) Pigmente aus einem Material mit hoher innerer Oberfläche und guter Wasseraufnahmefähigkeit vorzugsweise gefällte Kieselsäuren, Zeolithe, Bentonite, Magnesiumoxid oder Lithopone, enthält.

10. Mundstückbelagspapier nach einem der Ansprüche 1 bis 9, **dadurch gekennzeichnet, dass** sich die Erhebungen (2, 12.1, 22) ausschließlich an der vom Filterhüllpapier abgewendet anzuordnenden Seite des Mundstückbelagspapieres befinden.

11. Mundstückbelagspapier nach einem der Ansprüche 1 bis 10, **dadurch gekennzeichnet, dass** die Folie (1) aus Cellulosehydrat besteht.

12. Verfahren zur Herstellung von Mundstückbelagspapier einer Filterzigarette wobei das Mundstückbelagspapier eine Folie (1) ist und an zumindest einem zu verklebenden Flächenbereich an der mit Klebstoff in Kontakt kommenden Seite mit einer dreidimensionalen Oberflächenstruktur, also mit einer Oberfläche versehen ist, welche Erhebungen (2, 12.1, 22) aufweist, wobei diese Erhebungen (2, 12.1, 22) nur lokal aus der Folienoberfläche emporragen, **dadurch gekennzeichnet, dass** zur Bildung der Erhebungen (2, 12.1, 22) eine Beschichtung auf das Mundstückbelagspapier aufgetragen wird, ausgewählt aus der Gruppe umfassend: Beschichtung aus Strukturlack; Beschichtung aus Lack mit Strukturpigmenten.

## Claims

1. Mouthpiece lining paper of a filter cigarette, the mouthpiece lining paper being a foil (1) and being provided, on surface regions to be adhered, on the face that comes into contact with the adhesive, with a three-dimensional surface structure, that is to say with a surface that comprises raised portions (2, 12.1, 22), these raised portions (2, 12.1, 22) rising out of the foil surface only locally,
**characterized in that**
the raised portions (2) are formed of structural lacquer,
or **in that** the raised portions (12.1) are formed by structural pigments which are grains that, due to their size, rise at least 0.5 µm out of a lacquer layer (12) or structural lacquer layer applied to the surface of the foil (1).

2. Mouthpiece lining paper according to claim 1, **characterized in that** a row of raised portions (2, 12.1, 22) extends along an edge of the mouthpiece lining papier that, on the finished cigarette, extends therewith longitudinally along the overlap region of the mouthpiece lining paper.

3. Mouthpiece lining paper according to either claim 1 or claim 2, **characterized in that** the projection with respect to the original foil surface is at least 0.5 µm, preferably at least 1.5 µm, particularly preferably at least 5 µm, and **in that** at least 2, preferably at least 10, jumps in height occur per 1 cm of length along a straight line on the foil surface.

4. Mouthpiece lining paper according to any of claims 1 to 3, **characterized in that** individual raised portions (2, 12.1, 22) are spaced apart from other raised portions (2, 12.1, 22) in an island-like manner.

5. Mouthpiece lining paper according to any of claims 1 to 4, **characterized in that** raised portions (2, 12.1, 22) are arranged solely on the edge of the mouthpiece lining paper.

6. Mouthpiece lining paper according to any of claims 1 to 5, **characterized in that** the lacquer or structural lacquer is a soft-touch lacquer.

7. Mouthpiece lining paper according to any of claims 1 to 6, **characterized in that** local raised portions (2) made of structural lacquer are attached to both faces of the foil (1), raised portions (2) located on different faces of the foil (1) being offset from another in the plane of the foil (1) such that the bases thereof located on the foil (1) do not overlap, but instead are spaced apart from one another.

8. Mouthpiece lining paper according to any of claims 1 to 7, **characterized in that** the structural pigments are formed of a material having a high inner surface and good water absorbency, preferably precipitated silicic acids, zeolites, bentonites, magnesium oxide or lithopone.

9. Mouthpiece lining paper according to any of claims 1 to 7, **characterized in that** the lacquer layer (12) or structural lacquer layer of the raised portions (2) contains pigments made of a material having a high inner surface and good water absorbency, preferably precipitated silicic acids, zeolites, bentonites, magnesium oxide or lithopone.

10. Mouthpiece lining paper according to any of claims 1 to 9, **characterized in that** the raised portions (2, 12.1, 22) are solely located on the face of the mouthpiece lining paper that is to be arranged so as to face away from the filter wrapping paper.

11. Mouthpiece lining paper according to any of claims 1 to 10, **characterized in that** the foil (1) consists of cellulose hydrate.

12. Method for producing a mouthpiece lining paper of a filter cigarette, the mouthpiece lining paper being a foil (1) and being provided, on at least one surface region to be adhered, on the face that comes into contact with the adhesive, with a three-dimensional surface structure, that is to say with a surface that comprises raised portions (2, 12.1, 22), these raised portions (2, 12.1, 22) rising out of the foil surface only locally,
**characterized in that**, in order to form the raised portions (2, 12.1, 22), a coating is applied to the mouthpiece lining paper, which coating is selected from the group comprising: a coating made of structural lacquer; a coating made of lacquer comprising structural pigments.

## Revendications

1. Papier de recouvrement d'embout buccal d'une cigarette à filtre, le papier de recouvrement d'embout buccal étant un film (1) et étant pourvu au niveau de régions de surface à coller, du côté en contact avec l'adhésif, d'une structure de surface tridimensionnelle, donc d'une surface qui comporte des saillies (2, 12.1, 22), ces saillies (2, 12.1, 22) ne s'élevant que localement de la surface du film,
**caractérisé en ce que**
les saillies (2) sont formées à partir d'un vernis structural,
ou les saillies (12.1) sont formées par des pigments structuraux qui sont des grains qui s'élèvent, du fait de leur taille, d'au moins 0,5 µm d'une couche de vernis (12) ou d'une couche de vernis structural appliquée sur la surface du film (1).

2. Papier de recouvrement d'embout buccal selon la revendication 1, **caractérisé en ce qu'**une série de saillies (2, 12.1, 22) s'étend le long d'un bord du papier de recouvrement d'embout buccal, lequel bord s'étend le long de la zone de chevauchement du papier de recouvrement d'embout buccal sur lui-même sur la cigarette finie.

3. Papier de recouvrement d'embout buccal selon la revendication 1 ou 2, **caractérisé en ce que** la saillie par rapport à la surface de film d'origine est d'au moins 0,5 µm, de préférence d'au moins 1,5 µm, de manière particulièrement préférée d'au moins 5 µm et **en ce qu'**au moins 2, de préférence au moins 10, projections en hauteur apparaissent par 1 centimètre de longueur sur la surface de film le long d'une section droite.

4. Papier de recouvrement d'embout buccal selon l'une des revendications 1 à 3,
**caractérisé en ce que** des saillies individuelles (2, 12.1, 22) sont espacées d'autres saillies (2, 12.1, 22) à la manière d'îlots.

5. Papier de recouvrement d'embout buccal selon l'une des revendications 1 à 4,
**caractérisé en ce que** des saillies (2, 12.1, 22) sont disposées exclusivement au niveau du bord du papier de recouvrement d'embout buccal.

6. Papier de recouvrement d'embout buccal selon les revendications 1 à 5, **caractérisé en ce que** le vernis ou le vernis structural est un vernis à toucher doux.

7. Papier de recouvrement d'embout buccal selon l'une des revendications 1 à 6,
**caractérisé en ce que** des saillies locales (2) de vernis structural sont placées des deux côtés du film (1), des saillies (2) situées sur des côtés différents du film (1) étant très décalées les unes des autres dans le plan du film (1) de sorte que leurs surfaces de base situées sur le film (1) ne se chevauchent pas mais sont espacées les unes des autres.

8. Papier de recouvrement d'embout buccal selon l'une des revendications 1 à 7,
**caractérisé en ce que** les pigments structuraux sont formés à partir d'un matériau ayant une surface interne élevée et un bon pouvoir absorbant de l'eau, de préférence des silices précipitées, des zéolites, des bentonites, de l'oxyde de magnésium ou de la lithopone.

9. Papier de recouvrement d'embout buccal selon l'une des revendications 1 à 7,
**caractérisé en ce que** la couche de vernis (12) ou la couche de vernis structural des saillies (2) contient des pigments formés à partir d'un matériau ayant une surface interne élevée et une bonne capacité d'absorption de l'eau, de préférence des acides siliciques précipités, des zéolites, des bentonites, de l'oxyde de magnésium ou de la lithopone.

10. Papier de recouvrement d'embout buccal selon l'une des revendications 1 à 9,
**caractérisé en ce que** les saillies (2, 12.1, 22) sont situées exclusivement du côté du papier de recouvrement d'embout buccal qui doit être disposé à l'opposé du papier d'enveloppe de filtre.

11. Papier de recouvrement d'embout buccal selon l'une des revendications 1 à 10, **caractérisé en ce que** le film (1) comprend de l'hydrate de cellulose.

12. Procédé de fabrication de papier de recouvrement d'embout buccal d'une cigarette à filtre, le papier de recouvrement pour embout buccal étant un film (1) et étant pourvu au niveau d'au moins une région de surface à coller, du côté en contact avec l'adhésif, d'une structure de surface tridimensionnelle, donc d'une surface qui comporte des saillies (2, 12.1, 22), ces saillies (2, 12.1, 22) ne s'élevant que localement de la surface du film,
**caractérisé en ce que**, pour former les saillies (2, 12.1, 22), un revêtement est appliqué sur le papier de recouvrement d'embout buccal, lequel revêtement est sélectionné dans le groupe comprenant : un revêtement de vernis structural ; un revêtement de vernis pourvus de pigments structuraux.
